# EUROPÄISCHE PATENTSCHRIFT

(11) **EP 3 676 186 B1**
(45) Veröffentlichungstag und Bekanntmachung des Hinweises auf die Patenterteilung: **17.07.2024**
(21) Anmeldenummer: 18766158.2
(22) Anmeldetag: 30.08.2018
(51) Int. Cl.: B65C 9/04, B67C 3/24, B65G 47/84, B65G 29/00

(54) **VORRICHTUNG MIT SCHNELLWECHSEL TELLERTRÄGER UND VERSCHIEBBARER FÜHRUNGSKURVE**
DEVICE COMPRISING QUICK-CHANGE DISC SUPPORTS AND A DISPLACEABLE GUIDE CURVE
DISPOSITIF À PORTE-PLAQUE À CHANGEMENT RAPIDE ET CAME DE GUIDAGE COULISSANTE

(30) Priorität: 31.08.2017 DE 102017120083
(43) Veröffentlichungstag der Anmeldung: 08.07.2020
(73) Patentinhaber: KRONES AG, 93073 Neutraubling (DE)
(72) Erfinder: HABENSCHADEN, Nina, 93073 Neutraubling (DE); SENN, Konrad, 93073 Neutraubling (DE); SEIBOLD, Gabriel, 93073 Neutraubling (DE); EFFENBERGER, Harald, 93073 Neutraubling (DE); BAUER, Sascha, 93073 Neutraubling (DE)
(74) Vertreter: Hannke Bittner & Partner mbB Regensburg
(86) Internationale Anmeldenummer: PCT/EP2018/073398
(87) Internationale Veröffentlichungsnummer: WO 2019/043122

(56) Entgegenhaltungen:
- EP-A1- 1 657 162
- WO-A1-2005/123553
- GB-A- 2 091 201
- US-A1- 2011 272 245

## Beschreibung

Die vorliegende Erfindung bezieht sich auf eine Vorrichtung zum Behandeln von Behältnissen, wobei die Vorrichtung eine Schnellwechseleinrichtung und eine weiterentwickelte Führungsgarnitur aufweist, und ein Verfahren zum Behandeln von Behältnissen mit einer derartiger Vorrichtung.

Eine derartige Vorrichtung kann beispielsweise zum Transportieren von Behältnissen beispielsweise von Kunststoffbehältnissen eingesetzt werden.

Im internen Stand der Technik der Anmelderin sind Vorrichtungen zum Behandeln, oder beispielsweise zum Transportieren von Behältnissen bekannt. Um Behältnisse mit unterschiedlichen Durchmessern behandeln oder transportieren zu können, werden im internen Stand der Technik der Anmelderin für jede Behältergröße spezielle Garnituren angefertigt welche dann jeweils bei einem Produktwechsel ausgetauscht werden. Darüber hinaus müssen im internen Stand der Technik der Anmelderin beispielsweise sämtliche Behälterteller aus einer Vorrichtung herausgehoben werden.

Der Nachteil der aus dem internen Stand der Technik der Anmelderin bekannten Vorrichtungen besteht darin, dass diese bei einem Behälterwechsel ein Umrüsten der Garniturenteile vorsehen, ebenso müssen die einzelnen Aufnahmeteller gelöst und aus der Vorrichtung heraus genommen werden. Dies führt dazu, dass ein Produktwechsel mit hohen Kosten und langen Umrüstzeiten verbunden ist.

Aus der EP 1 657 162 A1 ist eine Vorrichtung gemäß dem Oberbegriff des Anspruchs 1 bekannt.

Der vorliegenden Erfindung liegt die Aufgabe zugrunde, eine Vorrichtung zur Verfügung zu stellen, welche die aus dem internen Stand der Technik der Anmelderin bekannten Nachteile überwindet und eine variable Anpassung an unterschiedliche Behältergrößen gewährleistet, bevorzugt ohne dass dabei ein vollständiger Garniturenwechsel vollzogen werden muss. Auch soll eine wesentlich einfachere Handhabung bezüglich der Aufnahmeteller aufgezeigt werden. Mit Hilfe dieser Vorrichtung lassen sich dann die Umrüstzeiten einer derartigen Vorrichtung erheblich verkürzen, was auch zu einer Kosteneinsparung führt. Darüber hinaus ist mit der vorliegen Vorrichtung auch der gesamte Umrüstprozess leichter auszuführen.

Diese Aufgaben werden erfindungsgemäß durch den Gegenstand des unabhängigen Anspruchs 1 gelöst. Vorteilhafte Ausführungsformen und Weiterbildungen sind Gegenstand der Unteransprüche.

Eine erfindungsgemäße Vorrichtung zum Behandeln von Behältnissen weist einen um eine Drehachse drehbaren Träger auf, wobei an dem Träger eine Vielzahl von Aufnahmetellern angeordnet ist. Dabei ist jeder dieser Aufnahmeteller um eine Drehachse drehbar und ist dazu geeignet und bestimmt die Behältnisse zu stützen.

An dem Träger sind weiterhin um vorgegebene Drehachsen drehbare Antriebsmittel angeordnet, welche mit den Aufnahmetellern drehfest koppelbar sind. Die Aufnahmeteller oder Drehteller sind von den Antriebsmitteln entfernbar. Die Antriebsmittel und/oder die Drehteller weisen Kopplungsmittel auf, welche eine Drehmomentübertragung zwischen den Antriebsmittel und den Aufnahmetellern ermöglichen.

Bevorzugt sind die Kopplungsmittel zweiteilig ausgebildet. Bevorzugt erreicht ein erster Teil über einen Formschluss eine rotative Kopplung. Dieser erste Teil kann beispielsweise als Verzahnung oder einer Vielzahl von Vorsprüngen ausgebildet sein. Bevorzugt erzeugt ein zweiter Teil eine axiale Kopplung. Beispielsweise wird die axiale Kopplung über eine Magnetkraft und/ oder über Gewichtskraft erzeugt. Bevorzugt ist die Kopplung derart ausgestaltet, dass eine Kopplung bei einem Einlegen eines Aufnahmetellers selbstständig erzeugt wird. Unter selbstständig wird dabei verstanden, dass ein Bediener nichts weiter unternehmen muss als den Aufnahmeteller einzulegen und sich die Kopplung von alleine, das heißt ohne weiteres Zutun eines Bedieners, herstellt.

Bevorzugt ist jeweils einem Drehteller ein Antriebsmittel zugeordnet. Dies hat den Vorteil, dass ein einfacherer Aufbau gewährleistet werden kann und im Falle einer Störung schneller reagiert wenn kann, da sofort erkennbar ist, an welchem Antriebsmittel die Störung vorliegt. Vorteilhaft sind die Drehteller am Außenumfang des drehbaren Trägers angeordnet. Dabei ist es besonders bevorzugt, wenn die Drehteller in Umfangsrichtung hintereinander angeordnet sind. Durch eine derartige Anordnung kann die größtmögliche Anzahl an Drehtellern angeordnet werden. Vorteilhaft ist der komplette Außenumfang des drehbaren Trägers mit Drehtellern bestückt.

In einer bevorzugten Ausführungsform weisen die Aufnahmeteller Aufnahmebereiche auf. Diese Aufnahmebereiche sind dazu geeignet und bestimmt einen Boden beziehungsweise einen Bodenbereich eines Behältnisses aufzunehmen. Bei einem aufzunehmenden Behältnis kann es sich dabei beispielsweise um eine Kunststoffflasche oder Glasflasche handeln. Bevorzugt weisen die Aufnahmeteller hierzu Aufnahmemulden auf. Diese Aufnahmemulden sind dabei bevorzugt an den Boden des zu behandelnden Behältnisses angepasst, sodass das Behältnis beispielsweise aufrecht in dem Aufnahmeteller angeordnet ist und dabei auch drehfest positioniert ist. Unter aufrecht ist dabei zu verstehen, dass sich das Behältnis in seiner normalen Position befindet, das heißt dass der Bodenbereich des Behältnisses näher dem Erdboden beziehungsweise dem Aufnahmebereich des Drehtellers zugeordnet ist als beispielsweise der Mündungsbereich des Behältnisses.

In einer bevorzugten Ausführungsform weist die Vorrichtung wenigstens eine Ausstattungseinrichtung auf, welche die Ausstattung der Behältnisse ermöglicht. Bei einer derartigen Ausstattungseinrichtung kann es sich beispielsweise um eine Etikettierungseinrichtung oder eine Druckeinrichtung oder dergleichen handeln, welche dazu geeignet und bestimmt sind ein Behältnis beispielsweise mit einem Etikett oder einem Druck zu beaufschlagen.

Vorteilhaft ist diese Ausstattungseinrichtung stationär angeordnet. Dabei wäre es denkbar, die Ausstattungseinrichtung direkt an der Vorrichtung anzuordnen oder auch in einem unmittelbaren Umfeld hiervon. Unter einem unmittelbaren Umfeld hiervon wird verstanden, dass sich die Ausstattungseinrichtung direkt neben der Vorrichtung angeordnet ist.

Vorteilhaft weist die Vorrichtung zweite Haltemittel auf. Diese Haltemittel sind dazu geeignet und bestimmt die zu behandelnden Behältnisse zusätzlich zu halten. Beispielsweise wäre es denkbar, dass die zweiten Haltemittel die Behältnisse an deren Mündungsbereich halten.

Diese Haltemittel könnten dabei beispielsweise als Haltedorne ausgebildet sein und beispielsweise auch in einen Mündungsbereich der Behältnisse eingreifen. Dabei wäre es weiterhin denkbar, dass auch diese Haltemittel beziehungsweise Haltedorne drehbar angeordnet sind. Darüber hinaus wäre es auch denkbar, dass diese Halteelemente beziehungsweise Haltedorne über einen eigenen Antrieb versorgt und somit gedreht werden. Dabei wäre es vorteilhaft wenn der Antrieb der Antriebsmittel mit dem Antrieb der beispielsweise Haltedorne gekoppelt wäre.

Bevorzugt weisen die Kopplungsmittel an den Aufnahmetellern und/oder an den Antriebsmittel angeordnete Vorsprünge auf. Diese Vorsprünge sind dazu geeignet und bestimmt, in an den Antriebsmitteln und/oder an den Aufnahmetellern angeordnete Ausnehmungen einzugreifen.

In einer bevorzugten Ausführungsform ist an den Antriebsmitteln und/oder den Aufnahmetellern eine Vielzahl von Ausnehmungen angeordnet. Diese Ausnehmungen sind dabei bevorzugt in Umfangsrichtung benachbart zueinander angeordnet und weisen darüber hinaus bevorzugt in Umfangsrichtung einen Abstand zueinander auf. Dieser Abstand ist (bezogen auf die Drehachse des Trägers) bevorzugt geringer als 60°, bevorzugt geringer als 20°, bevorzugt geringer als 10°. Somit entsteht eine Reihe von aneinander sich anschließenden Ausnehmungen, derart, dass es auch bei geringfügigen Bewegungen immer zu einem Einrasten kommt. Unter einer Reihe ist hierbei jedoch keine gerade Linie zu verstehen, sondern vielmehr ergeben die aneinandergereihten Ausnehmungen eine Kreisform.

Es ist vorteilhaft, dass eine Vielzahl von Ausnehmungen vorhanden sind, da so ein Montieren wesentlich einfacher und schneller zu bewerkstelligen ist, da es eine Vielzahl von Möglichkeiten gibt, wie beispielsweise der Aufnahmeteller aufgesetzt wird und somit nicht nur eine bestimmte vorgegebene Position vorhanden ist, wie der Aufnahmeteller aufgesetzt werden muss.

Erfindungsgemäß weist die Vorrichtung wenigstens einen Tellerträger auf. An diesem Tellerträger ist wenigstens ein Aufnahmeteller drehbar angeordnet. Durch diese Drehbarkeit der Aufnahmeteller können Behältnisse gehalten werden bleiben jedoch um ihre Längsachse drehbar.

Der Tellerträger ist gemeinsam mit dem an ihm angeordneten Aufnahmeteller von der Vorrichtung entnehmbar. Gleiches gilt für den Fall, dass die Aufnahmeteller montiert werden. Bevorzugt ist der Tellerträger gemeinsam mit dem an ihm angeordneten Aufnahmeteller an der Vorrichtung montierbar.

Bevorzugt sind die Aufnahmeteller und die Tellerträger so ausgeführt, dass bei einem Einlegen und/oder Montieren eines Tellerträgers sich die Aufnahmeteller selbstständig auf den Antriebsmitteln zentrieren und bevorzugt drehsicher koppeln. In einer bevorzugten Ausführungsform wäre es denkbar, dass eine Kombination einer Formschräge und eine die Gewichtskraft unterstützende Magnetkraft zu einer formschlüssigen Kopplung führt.

Bevorzugt ist die Aufnahme eines Aufnahmetellers in einem Tellerträger mit so viel Spiel behaftet, dass sich in einem eingebrachten/ montierten Zustand die Aufnahmeteller berührungslos in der Aufnahme eines Tellerträgers drehen können. Darüber hinaus sind die Aufnahmeteller bevorzugt dazu in der Lage, eine von einem Antriebsmittel eingeleitete Hubbewegung in axialer Richtung auszuführen. Diese Hubbewegung beträgt dabei bevorzugt zwischen 1 - 50 mm, bevorzugt zwischen 2 - 30 mm besonders bevorzugt zwischen 5 - 10 mm. Bei einer derartigen Bewegung berühren die Aufnahmeteller bevorzugt nicht den Tellerträger. Vorteilhaft kann auf Grund dieser Spielpassung auf eine aufwendige axiale und radiale Lagerung zwischen Aufnahmeteller und Tellerträger verzichtet werden.

Bevorzugt ist an dem Tellerträger eine von einem zu behandelnden Behälter abhängige Garnitureneinrichtung verbaut, wodurch ein Behälter bei einer Übergabe in die Maschine zwischen sich und einer Außengarnitur zentriert wird. Bevorzugt ist es möglich durch eine derartige Garnitureneinrichtung eine sichere Übergabe eines Behälters auf einen Aufnahmeteller gewährleisten zu können.

Bevorzugt ergibt sich in einem Fall in dem alle Tellerträger eingelegt und/oder montiert sind ein innenliegender Garniturenstern mit ebenso vielen Ausnehmungen wie Aufnahmeteller. Bevorzugt ist dabei die Kontur des innenliegenden Garniturensterns so gestaltet, dass diese zusammen mit der Außengarnitur ein sicheres Aufnehmen der Behältnisse in den Aufnahmeteller gewährleisten kann. Bevorzugt werden die Behältnisse bei Rotation des Aufnahmetellers und somit auch bei Rotation der Behältnisse (und auch im vorgespannten Zustand) nicht von der dem entstandenen Garniturenstern berührt. Bevorzugt können somit Beschädigungen an einem Behälter vermieden werden.

Vorteilhaft können die Tellerträger über eine selbstverriegelnde Hebelkonstruktion und/ oder über eine zustellbare Hubkurve an dem drehbaren Träger verriegelt und/oder gelöst werden. Beispielsweise könnte der Tellerträger durch Betätigen des Hebels in Richtung der Rotationsachse des Trägers gelöst werden. Dabei könnte beispielsweise eine Neigung des Hebels von beispielsweise 30° nötig sein. Befindet sich der Hebel in gelöster Position, so könnte beispielsweise ein Tellerträger durch betätigen des Hebels in entgegengesetzter Richtung verriegelt werden. Dabei könnte bevorzugt jedem Tellerträger ein Hebel zugeordnet sein, wodurch ein Verriegeln und/ oder Lösen der einzelnen Tellerträger bewerkstelligt werden.

Um ein Lösen der Tellerträger ausschließen zu können, können diese beispielsweise magnetisch, über eine Einrastung mit Federn, einem Klickverschluss oder in einer anderen Art und Weise zusätzlich befestigt werden. Zusätzlich zu der mechanischen Verriegelung wäre es denkbar, dass mittels Sensorik, beispielsweise einem Kamerasystem, Ultraschall, Taster, RFID, induktive/ kapazitive Sensorik oder dergleichen die Tellerträger beispielsweise auf richtigen Sitz oder Vorhandensein oder dergleichen überprüft werden. Bevorzugt werden nicht nur die Tellerträger an sich, sondern auch die in den Tellerträgern befindlichen Aufnahmeteller geprüft.

Eine weitere vorstellbare Variante zum Lösen der Behälteraufnahmeelemente ist eine zustellbare Kurve die nur im Tippbetrieb zugestellt werden kann. Diese Kurve könnte dabei die Elemente an einer definierten Position zum Wechseln aus den Magneten heben, wodurch ein kraftloses tauschen der Behälteraufnahmeelemente ermöglicht wird.

In einer bevorzugten Ausführungsform können so die Aufnahmeteller, bei gelöster Position des Hebels, händisch von dem Träger abgezogen werden. Dabei wäre es möglich, die Tellerträger händisch nach obenhin abzuziehen. Auch können die Tellerträger bei gelöster beziehungsweise geöffneter Stellung des Hebels an den drehbaren Träger angebracht, beziehungsweise eingesetzt werden.

In einer bevorzugten Ausführungsform sind mehrere Aufnahmeteller über einen Tellerträger verbunden. Bevorzugt sind an dem Tellerträger wenigstens zwei Aufnahmeteller, bevorzugt wenigstens drei Aufnahmeteller angeordnet. Bevorzugt sind an dem Tellerträger höchstens acht Aufnahmeteller, bevorzugt höchstens sechs Aufnahmeteller, bevorzugt höchstens fünf Aufnahmeteller und besonders bevorzugt höchstens vier Aufnahmeteller angeordnet. Vorteilhaft ist dabei jeder Tellerträger als Kreissegment ausgebildet.

Somit könnte eine je nach Anzahl der miteinander verbundenen Aufnahmeteller eine bestimmte Anzahl an Tellerträgern einen vollständigen Kreis ergeben. Es ist dabei jedoch vorteilhaft, dass nicht zu viele Aufnahmeteller einem einzigen Tellerträger zugeordnet sind. Dies ist der Tatsache geschuldet, dass ein Tellerträger mit zu viel darin angeordneten Aufnahmetellern in zu hohes Gewicht aufweist und mit zunehmender Größe auch immer unhandlicher wird. Dies hat zur Folge, dass ein Ein- und Ausbau der Tellerträger umständlicher wird und mehr Zeit beansprucht.

Ein solches System bietet den Vorteil, beispielsweise für die Ausführungsform, dass drei Aufnahmeteller an einem Tellerträger miteinander verbunden sind, dass es einem Bediener beim Wechseln der Aufnahmeteller, beispielsweise auf Grund eines Sortenwechsels, möglich ist, drei Aufnahmeteller auf einmal zu wechseln. Auf Grund dieser Gegebenheit kann die Zeit zum Umrüsten erheblich verkürzt werden.

Bevorzugt zentrieren sich die Aufnahmeteller über eine Formschräge selbstständig gegenüber den Antriebsmitteln. Bevorzugt wäre es somit möglich, dass die Aufnahmeteller für den Fall, dass diese nicht korrekt positioniert werden, selbstständig in eine korrekte Position rutschen beziehungsweise gleiten. Weiter ist es bevorzugt, dass die Aufnahmeteller mittels einer Verbindungseinheit wie beispielsweise über Stehbolzen oder dergleichen mit den Antriebsmitteln formschlüssig und rotationssicher verbindbar sind. Dabei wäre es denkbar, dass die Verbindungseinheit wie beispielsweise Stehbolzen an dem Aufnahmeteller auf dessen Unterseite, das heißt der Antriebsmittel zugewandten Seite angeordnet sind. Diese Verbindungseinheit kann dann bevorzugt in die Ausnehmungen der Antriebsmittel eingreifen, wodurch die formschlüssige und rotationssichere Verbindung hergestellt werden kann.

Weiter bevorzugt ist, dass ausgehend von der Drehachse des Trägers eine in radialer Richtung zu den Aufnahmetellern beabstandete gebogene Führungsgarnitur vorgesehen ist, sodass sich zwischen den Aufnahmeteller und der Führungsgarnitur ein Transportpfad der Behältnisse ergibt.

In einer bevorzugten Ausführungsform weist die Führungsgarnitur Stellmittel zum Verändern eines Krümmungsradius der Führungsgarnitur auf. Diese Stellmittel können dabei beispielsweise als Führungsschienen ausgestaltet sein. Bevorzugt kann die Führungsgarnitur automatisch verstellt werden und somit bevorzugt an einen Durchmesser der Behältnisse angepasst werden. Bevorzugt ist die Führungsgarnitur insbesondere über einen Stellmotor in radialer Richtung verschiebbar. Vorteilhaft wird durch einen Stellmotor eine Spindel angetrieben, wodurch beispielsweise eine Spindelmutter positionsgenau in axialer Richtung verschoben wird. Dabei kann beispielsweise die Spindelmutter über einen Zapfen mit einer Schiebkurve verbunden sein, welche wiederum über Linearführungen und Bolzen oder dergleichen mit den einzelnen Schieberelementen verbunden sind.

Bevorzugt kann durch das Verschieben der Führungsgarnitur die Bereite des Transportpfades geändert werden. Vorteilhaft kann durch das Verschieben der Führungsgarnitur die Breite des Transportpfades an den Durchmesser der Behältnisse, welche behandelt beziehungsweise transportiert werden sollen angepasst werden. Vorteilhaft kann die Führungsgarnitur durch ein- und ausfahren die Breite des Transportpfades um bis zu 75 mm verändert werden. Bevorzugt ist die Führungsgarnitur als Führungskurve ausgebildet. Bevorzugt ist das Gegenstück der Führungskurve als innenliegende Garnitur ausgebildet, welche beispielsweise an dem innenliegen Garniturenstern oder beispielsweise an einem Tellerträger oder beispielsweise an einem Aufnahmeteller angeordnet ist.

Es wäre denkbar, dass beispielsweise alle Führungsschienen miteinander gekoppelt sind. Das heißt dass sich alle Führungsschienen synchron zueinander bewegen. Darüber hinaus wäre es jedoch auch denkbar, dass sich die einzelnen Führungsschienen nicht synchron zueinander bewegen. Aufgrund der vorteilhaften Kopplung der einzelnen Führungsschienen, wäre es durchaus denkbar, dass sich die einzelnen Führungsschienen nacheinander bewegen und somit die Führungskurve an einen Durchmesser der Behältnisse angepasst wird.

In einer bevorzugten Ausführungsform ist die radial verstellbare Führungsschiene so mit dem Träger verbunden, dass wenn dieser bei einer Produktumstellung, beispielsweise auf eine andere Behältersorte, bezüglich seiner Höhe verstellt wird, sich die Führungsschiene mitbewegt, wodurch diese nicht extra/ separat verstellt werden muss.

Die vorliegende Erfindung bezieht sich weiterhin auf ein Verfahren zum Behandeln von Behältnissen gemäß Anspruch 14. An dem Träger ist eine Vielzahl von Aufnahmetellern angeordnet, wobei die Aufnahmeteller jeweils um Drehachsen drehbar sind und die Behältnisse stützen.

An dem Träger sind weiterhin um vorgegebene Drehachsen drehbare Antriebsmittel angeordnet. Diese Antriebsmittel sind mit den Aufnahmetellern drehfest gekoppelt, wobei die Drehteller von den Antriebsmittel entfernbar sind. Die Antriebsmittel und/oder die Drehteller weisen Kopplungsmittel auf, welche eine Drehmomentübertragung zwischen den Antriebsmitteln und den Aufnahmetellern ermöglichen.

Die vorteilhaft vorgesehene Vorrichtung bietet den Vorteil, dass sich durch die Kombination der Schnellwechseleinrichtung und der automatischen Garniturenverstellung die Anzahl der zu wechselnden Teile erheblich reduziert, da beispielsweise eine Führungsgarnitur nicht mehr gewechselt werden muss und beispielsweise in der Ausführungsform, dass drei Aufnahmeteller an einem Tellerträger angeordnet sind nur noch 1/3 der Aufnahmeteller gewechselt werden muss. Eine derartige Einsparung an zu wechselnden Elementen und somit auch Zeitersparnis ergibt sich nur aus der Kombination der Schnellwechseleinrichtung und der automatischen Garniturenverstellung.

Beim internen Stand der Technik der Anmelderin ist darüber hinaus bis dato eine zusätzliche Stützung/ Ausrichtung im Bodenbereich der zu behandelnden beziehungsweise zu transportierenden Behältnisse in Verbindung mit einer Einlaufgarnitur nötig, da bereits am Einlaufstern eine korrekte Ausrichtung an einem Zentrierdorn benötigt wird.

Bei der erfindungsgemäßen Vorrichtung kann zum einen auf die behälterspezifische Einlaufgarnitur komplett verzichtet werden und die Stützung des Bodenbereichs steht nun in Kombination mit dem neuen Aufnahmetellersystem. Darüber hinaus kann durch die hier vorgeschlagene Vorrichtung mit der automatischen Garniturenverstellung auf weitere Rüstteile verzichtet werden.

Es wird darauf hingewiesen, dass die hier beschriebene Führungsgarnitur auch unabhängig von der obigen Erfindung Anwendung finden kann. Die Anmelderin behält sich daher vor Schutz zu beanspruchen für eine Führungsgarnitur bzw. eine Führungseinrichtung zum Führen von Objekten und insbesondere von Behältnissen. Diese Führungsgarnitur weist dabei ein insbesondere langgestrecktes Führungselement auf, an welchem die Objekte bzw. Behältnisse entlanggleiten können.

Weiterhin weist die Führungsgarnitur eine Trägereinrichtung aus, an der das Führungselement angeordnet ist, wobei das Führungselement beweglich gegenüber dieser Trägereinrichtung angeordnet ist. Bevorzugt sind wenigsten zwei in der Erstreckungsrichtung des Führungselements voneinander beanstandete Stelleinrichtungen vorgesehen, mittels denen ein Abstand zwischen der Trägereinrichtung und dem Führungselement veränderbar ist. Diese Stellantriebe sind dabei insbesondere Linearantriebe, welche ein linear bewegliches Hubelement aufweisen, welches an dem Führungselement angeordnet ist.

Bevorzugt ist wenigstens ein Hubelement an dem Führungselement in dessen Erstreckungsrichtung beweglich und insbesondere verschieblich in dessen Erstreckungsrichtung angeordnet und ein anderes Hubelement ist gegenüber dem Führungselement in dessen Erstreckungsrichtung fest angeordnet.

Bevorzugt ist wenigstens eines der Hubelemente schwenkbar an dem Führungselement angeordnet. Bevorzugt ist das Führungselement als Gleitschiene ausgebildet. Bevorzugt sind die Hubelemente derart an dem Führungselement angeordnet, dass durch eine Bewegung der Hubelemente eine Position des Führungselements gegenüber der Trägereinrichtung veränderbar ist.

Bevorzugt sind die Hubelemente derart an dem Führungselement angeordnet, dass durch eine Bewegung der Hubelemente ein Krümmungsradius des Führungselements veränderbar ist. Bevorzugt ist das Führungselement ein flexibles und oder biegbares Element.

Bei einer weiteren vorteilhaften Ausführungsform weisen die Stelleinrichtungen jeweils ein Basiselement auf, dem gegenüber die Hubelemente linear beweglich sind. Besonders bevorzugt sind die Stelleinrichtungen als hydraulische, pneumatische und/oder elektromotorische Antriebe ausgebildet. Das Hubelement kann dabei ein Kolbenelement aufweisen, welches gegenüber dem Basiselement beweglich ist. Bevorzugt können auch Gelenke vorgesehen sein, um das oder die Hubelemente an dem Führungselement anzulenken.

Bevorzugt ist an dem Hubelement ein Gleitelement wie insbesondere aber nicht ausschließlich ein Nutentstein angeordnet, der in einer in dem Führungselement angeordnetem Führungselement wie beispielsweise einer Führungsnut gleiten kann.

Bei einer weiteren vorteilhaften Ausführungsform weist die Vorrichtung wenigstens drei, bevorzugt wenigstens vier und bevorzugt wenigstens fünf der genannten Hubelemente auf.

Bevorzugt ist dabei eines der Hubelemente fest in der Erstreckungsrichtung des Führungselements gegenüber diesem angeordnet und die übrigen Führungselemente sind in der Erstreckungsrichtung beweglich und insbesondere verschieblich gegenüber dem Führungselement angeordnet.

Bei einer weiteren vorteilhaften Ausführungsform handelt es sich bei demjenigen Hubelement, welches in der Erstreckungsrichtung des Führungselements fest an diesem angeordnet ist um ein in der Erstreckungsrichtung endseitiges Hubelement. Auf diese Weise kann durch eine gesteuerte Bewegung der einzelnen Hubelemente in besonders günstiger Weise eine Verstellung des Führungselements erreicht werden.

Bei einer weiteren bevorzugten Ausführungsform weist das Führungselement eine Führungsnut auf, insbesondere in der Form einer Schwalbenschwanzführung, in der die einzelnen Hubelemente und insbesondere an diesen angeordnete Führungssteine gleiten können.

Weiter Vorteile und Ausführungsformen ergeben sich aus den beigefügten Zeichnungen. Darin zeigen:
- Fig. 1: eine grob schematische Darstellung einer erfindungsgemäßen Vorrichtung
- Fig. 2: eine grob schematische Draufsicht eines beweglichen Trägers mit angebrachten Tellerträgern
- Fig. 3: eine etwas genauere Darstellung eines drehbaren Trägers
- Fig. 4: einen Ablaufplan für ein Herauslösen der Tellerträger
- Fig. 5a: eine etwas genauere Darstellung eines Tellerträgers
- Fig. 5b: eine etwas genauere Darstellung eines Tellerträgers von unten
- Fig. 5c: eine weitere etwas genauere Darstellung eines Tellerträgers
- Fig. 6a: eine grob schematische Darstellung einer Führungsgarnitur im ausgefahren Zustand
- Fig. 6b: eine grob schematische Darstellung einer Führungsgarnitur im eingefahren Zustand

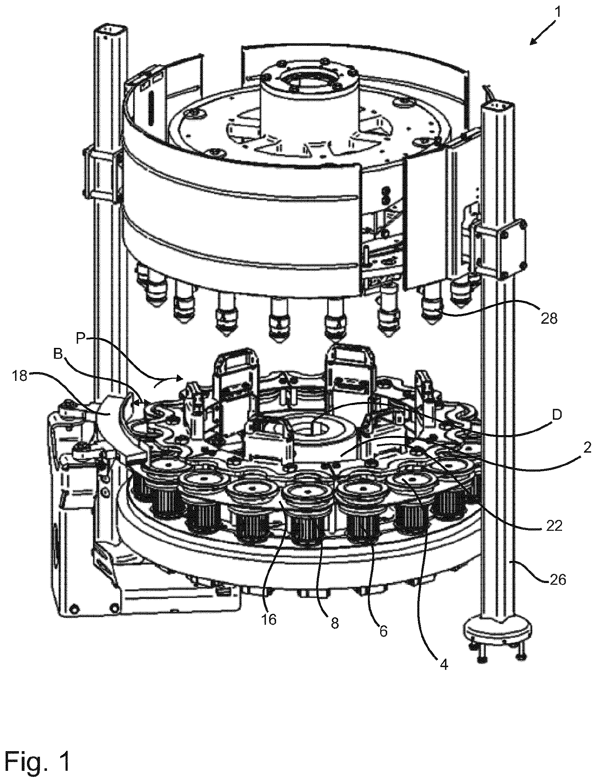

Figur 1 zeigt eine grob schematische Darstellung einer erfindungsgemäßen Vorrichtung 1. Der Figur ist der um eine Drehachse D drehbare Träger 2 zu entnehmen. Ebenso sieht man die Vielzahl von Aufnahmetellern 4, welche jeweils um Drehachsen drehbar sind. Darüber hinaus sind diese Aufnahmeteller 4 dazu geeignet und bestimmt Behältnisse 10 während diese behandelt und/ oder transportiert werden zu stützen.

Man erkennt die drehbaren Antriebsmittel 6 welche an dem Träger 2 um eine vorgegebene Drehachse angeordnet sind. Diese Antriebseinheiten 6 sind mit den Aufnahmeteller 4 über Kopplungsmittel 8 gekoppelt. Die Tellerträger 16 sind hier nur grob darstellt. Anhand dieser Figur lässt sich auch die Führungsgarnitur 18 erkennen, welche ausgehend von der Drehachse D des Trägers 2 in radialer Richtung zu den Aufnahmeteller beabstandet angeordnet ist. Man erkennt, dass die Führungsgarnitur gebogen ist und durch ein- und ausfahren die Breite B eines Transportpfades P verändern kann. Weiter lässt sich die Hebelkonstruktion 22 erkennen, welche es ermöglicht die einzelnen Tellerträger 16 aus der Vorrichtung 1 zu entnehmen.

Man erkennt, dass hier das Ausführungsbeispiel gezeigt ist, bei dem drei Aufnahmeteller 4 an einem Tellerträger 16 angeordnet sind. Neben der Hebelkonstruktion 22 ist auch die zustellbare Hubkurve 26 zu sehen. Darüber hinaus sind die weiteren Halteelemente 28 zu erkennen, welche dazu geeignet und bestimmt sind die Behältnisse 10 in deren Mündungsbereich zu halten.

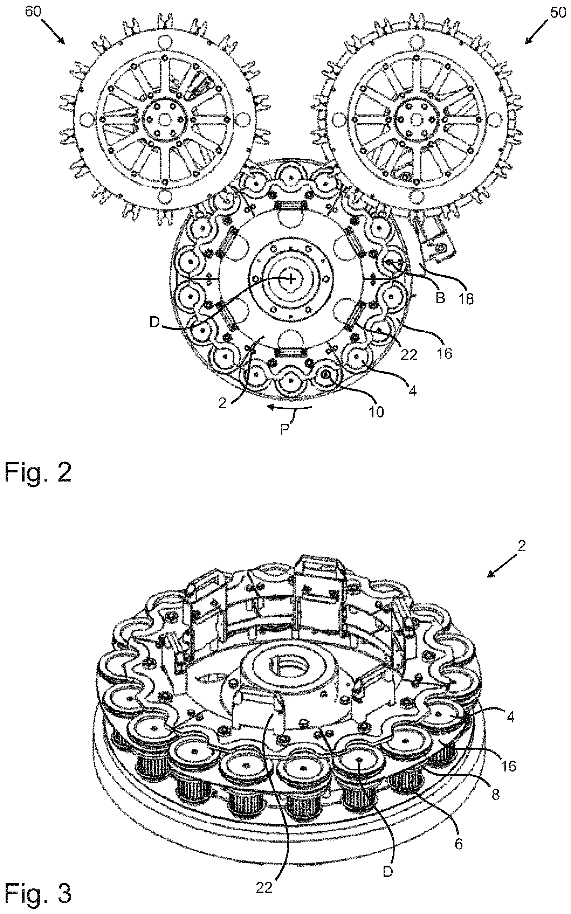

Figur 2 zeigt eine erfindungsgemäße Vorrichtung 1 in Draufsicht. Hier sind im Wesentlichen die gleichen Elemente und Einrichtungen zusehen wie in Figur 1. So ist hier beispielsweise auch wieder der um die Drehachse D drehbare Träger 2 zu sehen, ebenso wie die Aufnahmeteller 4, wobei auch hier auch wieder jeweils drei Aufnahmeteller 4 an einem Tellerträger 16 angeordnet sind. Die Aufnahmeteller 4 dienen auch hier wieder zu Aufnahme der Behältnisse 10, welche behandelt beziehungsweise entlang eines Transportpfades P transportiert werden.

Auch ist hier die Führungsgarnitur 18 zu sehen, wobei in dieser Figur 2 besser zu erkennen ist, dass die Führungsgarnitur 18 durch ein- und ausfahren eine Breite B eines Transportpfades P verändern kann. In der Draufsicht sieht man die Hebelkonstruktionen 22 ebenso wie, dass jedem Tellerträger 16 eine Hebelkonstruktion 22 zugeordnet ist. Der Vollständigkeitshalber sind in dieser Figur auch noch eine Zuführeinrichtung 50 welche die Behältnisse 10 der Vorrichtung 1 zuführt und eine Abführeinrichtung 60 welche die Behältnisse 10 von der Vorrichtung 1 abführt gezeigt.

Die Vorrichtung weist weiterhin (nicht gezeigte) Ausstattungseinrichtungen auf, welche insbesondere stationär entlang des Transportpfads der Behältnisse angeordnet sind. Wie erwähnt kann es sich dabei insbesondere um Etikettiereinrichtungen handeln, welche die Behältnisse mit Etiketten versehen oder auch um Druckelemente, welche die Behältnisse bedrucken.

Die Figur 3 zeigt eine etwas genauere Darstellung eines drehbaren Trägers 2. In dieser Figur ist ebenfalls wieder die Variante darstellt, bei welcher jeweils drei Aufnahmeteller 4 an einem Tellerträger 16 angeordnet sind. Ebenso ist dieser Figur zu entnehmen, dass die Aufnahmeteller 4 über Kopplungsmittel 8 mit Antriebsmittel 6 gekoppelt sind, wodurch die einzelnen Aufnahmeteller 4 um eine Drehachse D gedreht werden können. Jedem Tellerträger 16 ist mit einer Hebelkonstruktion 22 verbunden, wodurch die einzelnen Tellerträger 16 von dem drehbaren Träger 2 gelöst werden können.

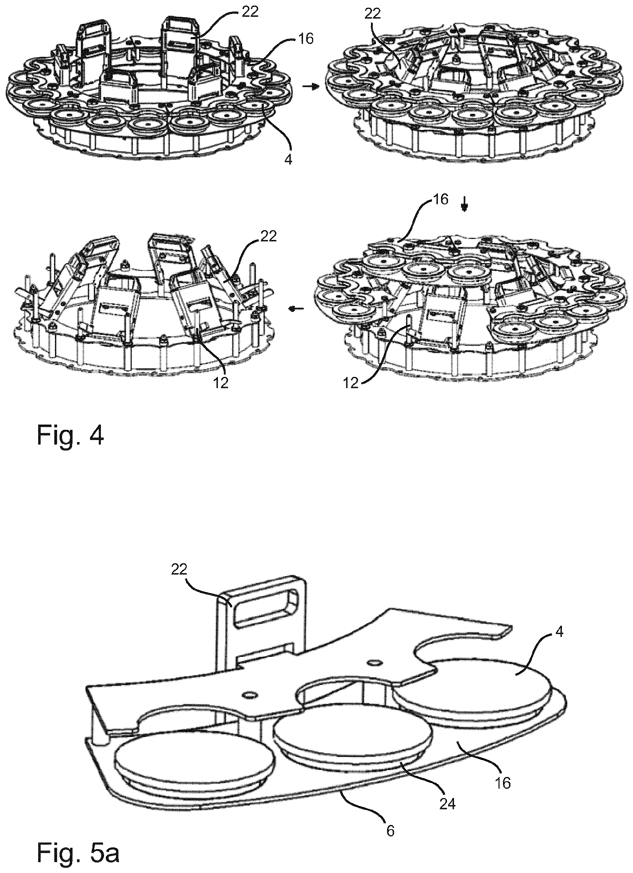

Figur 4 zeigt einen Ablaufplan, wie beispielsweise die einzelnen Tellerträger 16 gelöst und somit aus einer Vorrichtung 1 genommen werden können. Auch hier sind wieder jeweils drei Aufnahmeteller 4 an einem Tellerträger 16 angeordnet sind. Die einzelnen Tellerträger 16 sind über eine Hebelkonstruktion 22 mit der Vorrichtung verbunden. Befinden sich die Hebelelemente 22 beispielsweise in einer senkrechten Position, so sind die Tellerträger 16 mit der Vorrichtung verbunden und können nicht herausgenommen werden. Ebenso ist in dieser Figur zu erkennen, dass die einzelnen Tellerträger 16 durch ein Betätigen der Hebelelemente 22 gelöst werden können, indem die Hebelmittel 22 in Richtung der Rotationsachse geneigt werden. Auch erkennt man, dass die Tellerträger 16 zusätzlich gegen ein lösen gesichert indem hier beispielsweise die Tellerträger auf Zapfen 12 aufgesteckt werden können. Man erkennt, dass wenn ein Hebelelement 22 in Richtung Rotationsachse geneigt wird, ein Tellerträger 16 noch oben geschoben wird und somit aus der Vorrichtung entnommen werden kann.

Figur 5a zeigt eine grob schematische Darstellung eines Tellerträgers 16. Hier ist auch wieder eine dem Tellerträger 16 zugeordnete Hebelkonstruktion 22 zu sehen. Auch in dieser Figur ist wieder die Ausführungsform dargestellt, bei der drei Aufnahmeteller 4 einem Tellerträger 16 zugeordnet sind. Es ist hier grob schematisch dargestellt, dass sich die einzelnen Aufnahmeteller 4 mittels einer Formschräge 24 selbstständig gegenüber den Antriebsmitteln 6, welche in dieser Ansicht nicht zu sehen sind, da diese sich auf der Unterseite des Tellerträgers 6 befinden, zentrieren.

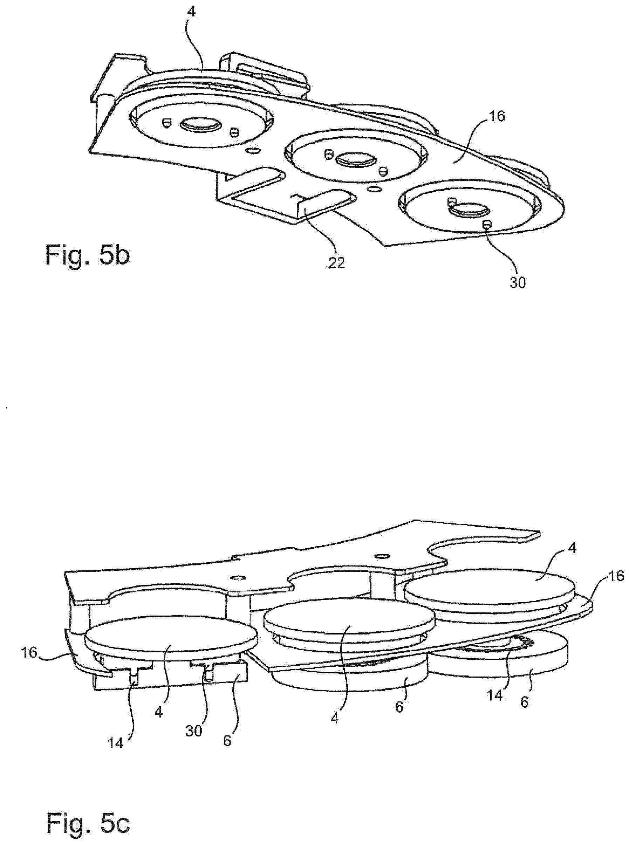

Figur 5b zeigt eine grob schematische Darstellung der Unterseite eines Tellerträgers 16. Man erkennt auch hier wieder die dem Tellerträger 16 zugeordnete Hebelkonstruktion 22. Darüber hinaus ist auch hier wieder die Ausführungsform gezeigt, bei welcher dem Tellerträger 16 drei Aufnahmeteller 4 zugeordnet sind. Auch ist hier die Verbindungseinheit 30 zu sehen, welche beispielsweise als Stehbolzen 30 ausgeführt ist. Die Stehbolzen 30 sind sichtbar, da in dieser Darstellung die Antriebsmittel 6, in welche ansonsten die Stehbolzen eingreifen würden, weggelassen wurden.

Figur 5c zeigt auch wieder eine grob schematische Darstellung eines Tellerträgers 16. Auch hier ist wieder der Tellerträger 16, die Aufnahmeteller 4 sowie die Vielzahl der Ausnehmungen 14 und die Stehbolzen zu sehen. Hier sind allerdings drei verschiedene Darstellungen gezeigt. Ganz rechts ist zu sehen, dass bereits ein Aufnahmeteller 4 auf den/ in den Tellerträger 16 eingesetzt wurde, jedoch der Aufnahmeteller 4 noch nicht mit dem Antriebsmittel 6 verbunden ist.

Dies führt dazu, dass die Vielzahl von Ausnehmungen 14, welche hier beispielsweise an dem Antriebsmittel 6 angebracht sind zu sehen ist. In der Mitte der Darstellung des Tellerträgers 16 ist auch wieder ein Aufnahmeteller 4 zu sehen. Hier wurde der Aufnahmeteller 4 jedoch bereits mit dem Antriebsmittel 6 verbunden. Die linke Darstellung zeigt eine Schnittdarstellung. Hier ist zu sehen, dass ein Aufnahmeteller 4 auf den Tellerträger 16 aufgesetzt wurde und der Aufnahmeteller 4 über die Stehbolzen 30 in die Ausnehmungen 14 des Antriebsmittels 6 eingreift, wodurch die Aufnahmeteller 4 formschlüssig und rotationssicher mit den Antriebsmitteln 6 verbunden sind.

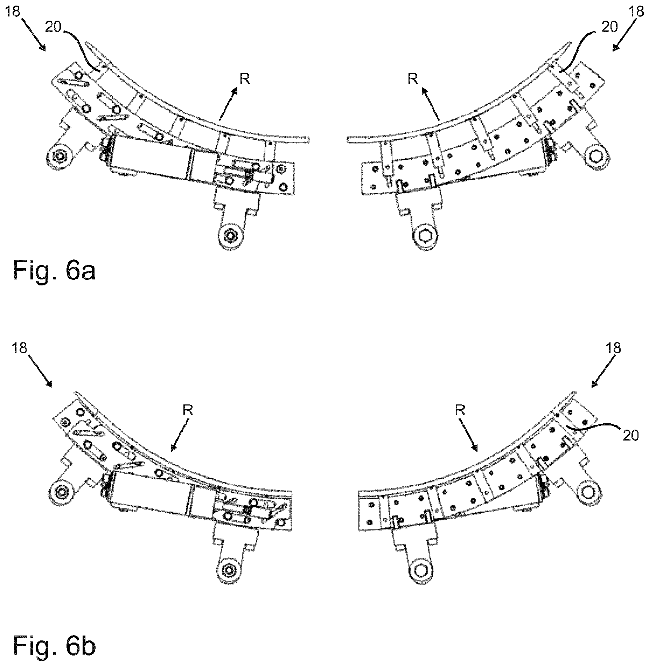

Die Figur 6a zeigt grob schematisch eine Führungsgarnitur 18 im ausgefahrenen Zustand. Die Führungsgarnitur 18 verfügt über einen nicht gezeigten Stellmotor. Man sieht die der Führungsgarnitur 18 zugeordneten Stellmittel 20, welche mit Hilfe des Stellmotors die Führungsgarnitur 18 beweglich ausgestalten. Durch diesen nicht gezeigten Stellmotor und den Stellmittel 20 kann die Führungsgarnitur 18 in radialer Richtung R bewegt werden und somit die Breite eines Transportpfades für die Behältnisse verändern. In dem in Figur 6a gezeigten Beispiel ist die Führungsgarnitur 18 ganz ausgefahren, das heißt die Führungsgarnitur 18 beziehungsweise die Führungskurve stellt den Transportpfad der Behältnisse zu, sodass der Transportpfad eine geringere Breite aufweist. Hierbei ist in der Figur 6a auch eine Schnittdarstellung der Führungsgarnitur 18 zu sehen
Figur 6b zeigt auch wieder grob schematisch eine Führungsgarnitur 18. Dieses Mal allerdings im eingefahren Zustand. Das heißt der auch hier wieder nicht gezeigte Stellmotor hat die Stellmittel 20 eingefahren, was dazu führt, dass sich die Führungsgarnitur 18 beziehungsweise die Führungskurve so in radialer Richtung bewegt, dass ein Transportpfad der Behältnisse größer wird, sodass Behältnisse mit einem größeren Durchmesser transportiert werden können. Hierbei ist auch wieder eine Schnittdarstellung gezeigt, wodurch die eingefahrenen Stellemittel 20 sichtbar sind.

### Bezugszeichenliste

- 1: Vorrichtung
- 2: Träger
- 4: Aufnahmeteller
- 6: Antriebsmittel
- 8: Kopplungsmittel
- 10: Behältnis
- 12: Zapfen
- 14: Ausnehmungen
- 16: Tellerträger
- 18: Führungsgarnitur
- 20: Stellmittel
- 22: Hebelkonstruktion
- 24: Formschräge
- 26: Hubkurve
- 28: Halteelement
- 30: Verbindungseinheit/ Stehbolzen

- 50: Zuführeinrichtung
- 60: Abführeinrichtung
- B: Breite
- P: Transportpfad
- R: radiale Richtung

## Patentansprüche

1. Vorrichtung zum Behandeln von Behältnissen (10) mit einem um eine Drehachse (D) drehbaren Träger (2), wobei an dem Träger (2) eine Vielzahl von Aufnahmetellern (4) angeordnet ist, wobei die Aufnahmeteller (4), jeweils um Drehachsen drehbar sind und dazu geeignet und bestimmt sind die Behältnisse (10) zu stützen,
wobei an dem Träger (2) weiterhin um vorgegebene Drehachsen drehbare Antriebsmittel (6) angeordnet sind, welche mit den Aufnahmetellern (4) drehfest koppelbar sind, wobei die Aufnahmeteller (4) von den Antriebsmitteln (6) entfernbar sind und die Antriebsmittel (6) und/ oder die Aufnahmeteller (4) Kopplungsmittel (8) aufweisen, welche eine Drehmomentübertragung zwischen den Antriebsmitteln (6) und den Aufnahmetellern (4) ermöglichen, wobei die Vorrichtung (1) wenigstens einen Tellerträger (16) aufweist, wobei
der Tellerträger (16) gemeinsam mit dem an ihm angeordneten Aufnahmeteller (4) von der Vorrichtung (1) entnehmbar ist,
**dadurch gekennzeichnet, dass**
an dem Tellerträger (16) wenigstens ein der Aufnahmeteller (4) drehbar angeordnet ist.

2. Vorrichtung (1) nach Anspruch 1,
**dadurch gekennzeichnet, dass**
die Kopplungsmittel (8) an den Aufnahmetellern (4) und/oder an den Antriebsmitteln (6) angeordnete Vorsprünge aufweisen, welche dazu geeignet und bestimmt sind, in an den Antriebsmitteln (6) und/oder an den Aufnahmetellern (4) angeordnete Ausnehmungen (14) einzugreifen.

3. Vorrichtung (1) nach wenigstens einem der vorangegangen Ansprüche,
**dadurch gekennzeichnet, dass**
die Kopplungsmittel (8) zweiteilig ausgebildet sind, wobei ein erster Teil über einen Formschluss eine rotative Kopplung erreicht, und wobei ein zweiter Teil eine axiale Kopplung erzeugt.

4. Vorrichtung (1) nach Anspruch 2,
**dadurch gekennzeichnet, dass**
an den Antriebsmitteln (6) und/oder den Aufnahmetellern (4) eine Vielzahl von Ausnehmungen (14) angeordnet ist, welche in einer Umfangsrichtung benachbart zueinander sind und in Umfangsrichtung einen Abstand aufweisen, der geringer ist als 60°, bevorzugt geringer als 20°, bevorzugt geringer als 10°.

5. Vorrichtung (1) nach wenigstens einem der vorangegangen Ansprüche,
**dadurch gekennzeichnet, dass**
an dem Tellerträger (16) wenigstens zwei Aufnahmeteller (4) und bevorzugt wenigstens drei Aufnahmeteller (4) angeordnet sind und/oder an dem Tellerträger (16) höchstens acht Aufnahmeteller (4), bevorzugt höchstens sechs Aufnahmeteller (4), bevorzugt höchstens fünf Aufnahmeteller (4) und besonders bevorzugt höchstens vier Aufnahmeteller (4) angeordnet sind.

6. Vorrichtung (1) nach wenigstens einem der vorangegangen Ansprüche,
**dadurch gekennzeichnet, dass**
ausgehend von der Drehachse (D) des Trägers eine in radialer Richtung zu den Aufnahmetellern (4) beabstandete gebogene Führungsgarnitur (18) vorgesehen ist, sodass sich zwischen der Garnitur am Tellerträger (16) und der Führungsgarnitur (18) ein Transportpfad (P) der Behältnisse (10) ergibt.

7. Vorrichtung (1) nach dem vorangegangenen Anspruch,
**dadurch gekennzeichnet, dass**
die Führungsgarnitur (18) Stellmittel (20) zum Verändern eines Krümmungsradius der Führungsgarnitur (18) aufweist.

8. Vorrichtung (1) nach Anspruch 1,
**dadurch gekennzeichnet, dass**
die Aufnahmeteller (4) über eine selbstverriegelnde Hebelkonstruktion (22) und/oder über eine zustellbare Hubkurve an dem Träger (2) verriegelbar oder von dem Träger lösbar sind.

9. Vorrichtung (1) nach wenigstens einem der vorangegangen Ansprüche,
**dadurch gekennzeichnet, dass**
die Aufnahmeteller (4) in gelöster Position händisch von dem Träger (2) abgezogen werden können.

10. Vorrichtung (1) nach wenigstens einem der vorangegangen Ansprüche,
**dadurch gekennzeichnet, dass**
sich die Aufnahmeteller (4) über eine Formschräge (24) selbstständig gegenüber den Antriebsmittel (6) zentrieren und/oder mittels Stehbolzen (30) oder dergleichen mit den Antriebsmitteln (6) formschlüssig und rotationssicher verbindbar sind.

11. Vorrichtung (1) nach wenigstens einem der vorangegangen Ansprüche 6 - 7,
**dadurch gekennzeichnet, dass**
die Führungsgarnitur (18) automatisch verstellt werden kann.

12. Vorrichtung (1) nach wenigstens einem der vorangegangen Ansprüche 6 - 7,
**dadurch gekennzeichnet, dass**
die Führungsgarnitur (18) insbesondere über einen Stellmotor in radialer Richtung (R) verschiebbar ist, wobei durch das Verschieben der Führungsgarnitur (18) die Breite (B) des Transportpfades (P) an den Durchmesser der Behältnisse (10) angepasst werden kann.

13. Vorrichtung (1) nach wenigstens einem der vorangegangen Ansprüche,
**dadurch gekennzeichnet, dass**
die Vorrichtung (1) wenigstens eine Ausstattungseinrichtung aufweist, welche die Behältnisse (10) mit einer Ausstattung und insbesondere mit einem Etikett oder einem Druck versieht.

14. Verfahren zum Behandeln von Behältnissen (10) mit einer Vorrichtung (1) nach einem der vorangegangen Ansprüche, wobei die Antriebsmittel (6) mit den Aufnahmetellern (4) drehfest gekoppelt sind.

## Claims

1. Apparatus for handling containers (10) comprising a carrier (2) which is rotatable about an axis of rotation (D), wherein a plurality of receiving discs (4) are arranged on the carrier (2), wherein the receiving discs (4) are each rotatable about axes of rotation and are suitable and intended for supporting the containers (10),
wherein furthermore drive means (6), which are rotatable about predetermined axes of rotation are arranged on the carrier (2) and which are coupled non-rotatably to the receiving discs (4), wherein the receiving discs (4) are removeable from the drive means (6), and the drive means (6) and/or the receiving discs (4) have coupling means (8) which enable a transmission of torque between the drive means (6) and the receiving discs (4), wherein the apparatus (1) has at least one disc carrier (16), wherein the disc carrier (16) is removable form the apparatus (1) together with the receiving disc (4) arranged thereon, **characterised in that**
at least one receiving disc (4) is arranged rotatable on the disc carrier (16).

2. Apparatus (1) according to claim 1,
**characterised in that**
the coupling means (8) have projections which are arranged on the receiving discs (4) and/or on the drive means (6) and which are suitable and intended to engage in recesses (14) arranged on the drive means (6) and/or on the receiving discs (4).

3. Apparatus (1) according to at least one of the preceding claims, **characterised in that**
the coupling means (8) are formed in two parts, wherein a first part achieves a rotary coupling by means of a form fit, and wherein a second part produces an axial coupling.

4. Apparatus (1) according to claim 2,
**characterised in that**
a plurality of recesses (14) are arranged on the drive means (6) and/or the receiving discs (4), which are adjacent relative to one another in a circumferential direction and have a spacing in the circumferential direction which is less than 60°, preferably less than 20°, preferably less than 10°.

5. Apparatus (1) according to at least one of the preceding claims, **characterised in that**
at least two receiving discs (4) and preferably at least three receiving discs (4) are arranged on the disc carrier (16) and/or at most eight receiving discs (4), preferably at most six receiving discs (4), preferably at most five receiving discs (4) and particularly preferably at most four receiving discs (4) are arranged on the disc carrier (16).

6. Apparatus (1) according to at least one of the preceding claims, **characterised in that**,
starting from the axis of rotation (D) of the carrier a guide fitting (18) is provided which is bent and spaced apart in the radial direction relative to the receiving discs (4), so that a transport path (P) of the containers (10) is produced between the fitting on the disc carrier (16) and the guide fitting (18).

7. Apparatus (1) according to the preceding claim,
**characterised in that**
the guide fitting (18) has adjustment means (20) for changing a radius of curvature of the guide fitting (18).

8. Apparatus (1) according to claim 1,
**characterised in that**
the receiving discs (4) are lockable on the carrier (2) or releasable from the carrier by means of a self-locking lever construction (22) and/or by means of a movable lift curve.

9. Apparatus (1) according to at least one of the preceding claims, **characterised in that**
the receiving discs (4) in the released position can be manually pulled off from the carrier (2).

10. Apparatus (1) according to at least one of the preceding claims, **characterised in that**
the receiving discs (4) are centred autonomously by means of a draft angle (24) relative to the drive means (6) and/or are connectable by positive engagement and non-rotatably to the drive means (6) by means of stud bolts (30) or the like.

11. Apparatus (1) according to at least one of the preceding claims 6-7, **characterised in that**
the guide fitting (18) can be adjusted automatically.

12. Apparatus (1) according to at least one of the preceding claims 6-7, **characterised in that**
the guide fitting (18) is displaceable in the radial direction (R) in particular by means of a servo motor, wherein the width (8) of the transport path (P) can be adapted by the displacement of the guide fitting (18) to the diameter of the containers (10).

13. Apparatus (1) according to at least one of the preceding claims, **characterised in that**
the apparatus (1) has at least one decorating device which provides the containers (10) with a decoration and in particular with a label or printing.

14. Method for handling containers (10) with and apparatus (1) according to one of the preceding claims,
wherein drive means (6) are coupled non-rotatably to the receiving discs (4).

## Revendications

1. Dispositif de traitement de récipients (10) avec un support (2) pouvant tourner autour d'un axe de rotation (D), dans lequel une pluralité de plateaux de réception (4) est disposée sur le support (2), dans lequel les plateaux de réception (4) peuvent tourner respectivement autour d'axes de rotation et sont adaptés pour et se destinent à soutenir les récipients (10),
dans lequel des moyens d'entraînement (6) pouvant tourner par ailleurs autour d'axes de rotation prédéfinis sont disposés sur le support (2), lesquels peuvent être couplés de manière solidaire en rotation aux plateaux de réception (4), dans lequel les plateaux de réception (4) peuvent être retirés des moyens d'entraînement (6) et les moyens d'entraînement (6) et/ou les plateaux de réception (4) présentent des moyens de couplage (8), lesquels permettent un transfert de couple de rotation entre les moyens d'entraînement (6) et les plateaux de réception (4), dans lequel le dispositif (1) présente au moins un support de plateau (16), dans lequel le support de plateau (16) peut être retiré du dispositif (1) conjointement avec le plateau de réception (4) disposé sur celui-ci, **caractérisé en ce que**
au moins un des plateaux de réception (4) est disposé de manière à pouvoir tourner sur le support de plateau (16).

2. Dispositif (1) selon la revendication 1,
**caractérisé en ce que**
les moyens de couplage (8) présentent des parties faisant saillie disposées sur les plateaux de réception (4) et/ou sur les moyens d'entraînement (6), lesquelles sont adaptées pour et se destinent à venir en prise avec des évidements (14) disposés sur les moyens d'entraînement (6) et/ou sur les plateaux de réception (4).

3. Dispositif (1) selon au moins l'une quelconque des revendications précédentes,
**caractérisé en ce que**
les moyens de couplage (8) sont réalisés en deux parties, dans lequel une première partie atteint un couplage rotatif par l'intermédiaire d'une complémentarité de forme et dans lequel une deuxième partie génère un couplage axial.

4. Dispositif (1) selon la revendication 2,
**caractérisé en ce que**
est disposée sur les moyens d'entraînement (6) et/ou sur les plateaux de réception (4) une pluralité d'évidements (14), lesquels sont adjacents les uns par rapport aux autres dans une direction périphérique et présentent dans la direction périphérique une distance, qui est inférieure à 60°, de manière préférée inférieure à 20°, de manière préférée inférieure à 10°.

5. Dispositif (1) selon au moins l'une quelconque des revendications précédentes,
**caractérisé en ce que**
au moins deux plateaux de réception (4) et de manière préférée au moins trois plateaux de réception (4) sont disposés sur le support de plateau (16) et/ou huit plateaux de réception (4) au maximum, de manière préférée six plateaux de réception (4) au maximum, et de manière préférée cinq plateaux de réception (4) au maximum et de manière particulièrement préférée quatre plateaux de réception (4) au maximum sont disposés sur le support de plateau (16).

6. Dispositif (1) selon au moins l'une quelconque des revendications précédentes,
**caractérisé en ce que**
une garniture de guidage (18) cintrée tenue à distance dans une direction radiale par rapport aux plateaux de réception (4) est prévue en partant de l'axe de rotation (D) du support si bien qu'un trajet de transport (P) des récipients (10) en résulte entre la garniture sur le support de plateau (16) et la garniture de guidage (18).

7. Dispositif (1) selon la revendication précédente,
**caractérisé en ce que**
la garniture de guidage (18) présente des moyens de réglage (20) destinés à modifier un rayon d'incurvation de la garniture de guidage (18).

8. Dispositif (1) selon la revendication 1,
**caractérisé en ce que**
les plateaux de réception (4) peuvent être verrouillés sur le support (2) par l'intermédiaire d'une structure à levier à verrouillage automatique (22) et/ou par l'intermédiaire d'une came de levage pouvant être approchée ou peuvent être détachés du support.

9. Dispositif (1) selon au moins l'une quelconque des revendications précédentes,
**caractérisé en ce que**
les plateaux de réception (4) peuvent être retirés à la main du support (2) dans une position détachée.

10. Dispositif (1) selon au moins l'une quelconque des revendications précédentes,
**caractérisé en ce que**
les plateaux de réception (4) se centrent de manière autonome par rapport aux moyens d'entraînement (6) par l'intermédiaire d'un biseau à complémentarité de forme (24) et/ou peuvent être assemblés par complémentarité de forme et en toute fiabilité par rotation aux moyens d'entraînement (6) par l'intermédiaire de boulons filetés (30) ou similaires.

11. Dispositif (1) selon au moins l'une quelconque des revendications précédentes 6 - 7,
**caractérisé en ce que**
la garniture de guidage (18) peut être ajustée automatiquement.

12. Dispositif (1) selon au moins l'une quelconque des revendications précédentes 6 - 7,
**caractérisé en ce que**
la garniture de guidage (18) peut être coulissée dans une direction radiale (R) en particulier par l'intermédiaire d'un servomoteur, dans lequel la largeur (B) du trajet de transport (P) peut être adaptée au diamètre des récipients (10) par le coulissement de la garniture de guidage (18).

13. Dispositif (1) selon au moins l'une quelconque des revendications précédentes,
**caractérisé en ce que**
le dispositif (1) présente au moins un système d'accessoirisation, lequel dote les récipients (10) d'un accessoire et en particulier d'une étiquette ou d'une impression.

14. Procédé de traitement de récipients (10) avec un dispositif (1) selon l'une quelconque des revendications précédentes,
dans lequel les moyens d'entraînement (6) sont couplés de manière solidaire en rotation aux plateaux de réception (4).
